# FASCICULE DE BREVET EUROPEEN

(11) **EP 1 585 840 B1**
(45) Date de publication et mention de la délivrance du brevet: **02.11.2006**
(21) Numéro de dépôt: 04703385.7
(22) Date de dépôt: 20.01.2004
(51) Int. Cl.: C21B 7/20

(54) **METHODE ET INSTALLATION DE CHARGEMENT D UNE TREMIE**
VERFAHREN UND VORRICHTUNG ZUR BESCHICKUNG VON TRICHTERN
HOPPER-LOADING METHOD AND INSTALLATION

(30) Priorité: 21.01.2003 LU 91000
(43) Date de publication de la demande: 19.10.2005
(73) Titulaire: PAUL WURTH S.A., 1122 Luxembourg (LU)
(72) Inventeur: CIMENTI, Giovanni, L-8062 Bertrange (LU); LONARDI, Emile, L-4945 Bascharage (LU); THILLEN, Guy, L-9234 Diekirch (LU)
(74) Mandataire: Beissel, Jean
(86) Numéro de dépôt international: PCT/EP2004/000421
(87) Numéro de publication internationale: WO 2004/065640

(56) Documents cités:
- DE-U- 29 513 785
- GB-A- 2 090 216
- US-A- 4 469 216
- PATENT ABSTRACTS OF JAPAN vol. 007, no. 181 (C-180), 10 août 1983 (1983-08-10) -& JP 58 087213 A (KAWASAKI SEITETSU KK), 25 mai 1983 (1983-05-25)

## Description

### Introduction

La présente invention concerne une installation de chargement d'une trémie, notamment dans une installation de chargement d'un four à cuve.

Afin de garantir un chargement optimal d'un four à cuve, il est souhaitable que les matières stockées dans la trémie de stockage soient réparties de manière assez homogène. Or la répartition homogène des matières à charger dans la trémie est difficile dû à la granulométrie de la matière de chargement. En effet, la matière de chargement, qu'il s'agisse des particules de minerai de fer ou de particules de coke, possède une granulométrie variable et non uniforme. Lors de l'acheminement des matières vers la trémie, par exemple par l'intermédiaire d'une bande transporteuse, les particules fines ont tendance à s'accumuler en plus grosses proportions au fonds de la couche de matière acheminée tandis que les particules grosses restent s'accumulent dans la partie supérieure de la couche.

Il s'ensuit qu'au moment du déversement des matières de la bande transporteuse, la matière tombe sous forme de rideau d'une certaine largeur dont la couche arrière, vu dans le sens de l'acheminement, comprend une majorité de particules grosses tandis que la couche avant comprend davantage de particules fines. Cette répartition des particules dans le rideau de matière a pour effet que, après chargement, la partie arrière de la trémie, vu dans le sens de l'acheminement des matières, contient plus de particules grosses que la partie avant et que donc la répartition des matières est fortement non-homogène.

De plus, lors de l'impact de la matière à charger dans la trémie, il se forme un cône de déversement naturel autour de la ligne de chute. Les particules les plus grosses et plus lourdes ont tendance alors à dégringoler le long des pentes de ce cône, sous l'influence de leur poids vers les régions périphériques de l'enceinte. Par contre, les particules les plus petites, appelées "fines" ont tendance à rester dans la région centrale du cône de déversement. Ce phénomène renforce encore la ségrégation de la matière à l'intérieur de la trémie.

Afin de remédier à ce problème, on a proposé de faire tourner la trémie autour d'un axe vertical lors du chargement. Grâce à la rotation de la trémie, les effets de la ségrégation dans le rideau de matière sur la répartition des matières dans la trémie peuvent être diminués. Malheureusement la ségrégation des matières dû au cône de déversement à l'intérieur de la trémie ne peut pas être diminuée. Une telle trémie rotative ne peut donc pas satisfaire les besoins d'un chargement homogène d'un four à cuve. De plus une telle trémie rotative doit être logée dans la charpente du four à cuve par l'intermédiaire de roulements. Vu la taille et le poids d'une telle trémie, cette mesure nécessite un investissement considérable et pose des problèmes au niveau de l'entretien de l'installation.

### Objet de l'invention

L'objet de la présente invention est de proposer une méthode de chargement d'une trémie, qui mène à une meilleure répartition des matières dans la trémie. Un autre but de l'invention est de proposer un dispositif de répartition pour matières en vrac et une installation de chargement qui permettent de réaliser cette méthode.

### Description générale de l'invention

Conformément à l'invention, cet objectif est atteint par une méthode de chargement d'une trémie, comprenant les étapes de
- déverser les matières en vrac sous forme de rideau de matières au-dessus de ladite trémie, ledit rideau de matières comprenant une étendue latérale,
- diviser ledit rideau en au moins deux flux partiels, ladite division se faisant transversalement à ladite étendue latérale, à l'aide d'un déflecteur déplaçable latéralement,
- dévier chacun desdits flux partiels vers une région distincte de la trémie.

En subdivisant le rideau de matières transversalement à son étendue latérale en plusieurs flux partiels, on assure que la composition des flux partiels en grosses et fines particules est essentiellement égale. En effet, si la répartition des matières varie fortement de l'avant vers l'arrière du rideau de matières, vu dans la direction de l'acheminement des matières en vrac, elle est en revanche essentiellement constante en direction de l'étendue latérale du rideau, c'est-à-dire de gauche à droite. Il s'ensuit que la division du rideau et la déviation des flux partiels dans des régions distinctes de la trémie assure un chargement de ces régions distinctes en un matériau de composition comparable. Ceci garantit globalement une meilleure répartition des matières, bien qu'à l'intérieur des flux partiels le phénomène de ségrégation reste présent. En variant la position du déflecteur déplaçable latéralement, il devient possible de varier la largeur de flux partiel et donc la quantité de matériel contenue dans ces flux partiels.

Dans une exécution préférée, la méthode comprend en outre l'étape de régler des débits de matières dans les flux partiels par un ajustement des endroits de division dudit rideau de matières. Dû aux mécanismes liés à l'acheminement des matières en vrac, soit par bande transporteuse, soit par élévateurs à skips, le rideau en matière présente généralement une épaisseur plus importante au centre du rideau que dans les régions extérieures. Il en résulte que la teneur en matière du rideau est plus élevé au centre du rideau qu'à l'extérieur de celui-ci. En choisissant convenablement les endroits de division du rideau, cette différence de teneur en matières peut être aisément compensée. Si par exemple le rideau est divisé en quatre flux partiels adjacents, la subdivision du rideau se fera de telle sorte que les flux partiels centraux aient une largeur inférieure à celle des flux extérieurs.

Afin d'assurer une bonne répartition des matières dans la trémie, les endroits de division dudit rideau de matières sont de préférence choisis de manière à égaliser les débits de matière desdits flux partiels.

Conformément à l'invention, un dispositif de répartition de matières en vrac, qui est destiné à être arrangé dans un rideau de matières en vrac déversés d'un moyen d'acheminement de matières en vrac, comprend une caisse avec une ouverture supérieure, au moins une paroi qui s'étend transversalement par rapport audit rideau de matières à l'intérieur de ladite caisse de manière à subdiviser ladite caisse en au moins deux compartiments, et au moins deux moyens de déversement, un desdits moyens de déversement étant associé à chacun des compartiments de ladite caisse, lesdits moyens de déversement étant dirigés de manière à dévier des matières reçues dans les compartiments respectifs dans une région distincte de la trémie, ainsi qu'un déflecteur disposé au-dessus de ladite paroi, ce déflecteur étant latéralement déplaçable par rapport à ladite paroi.

Placé dans le rideau de matières en vrac, la ou les parois de séparation entre les compartiments de la caisse divisent le rideau de matière en plusieurs flux partiels de composition comparable. Les flux partiels sont reçus dans les compartiments respectifs de la caisse et déviés par l'intermédiaire des moyens de déversement dans des régions distinctes de la trémie.

Il est à noter que le fait de diviser le rideau de matières transversalement à son étendue latérale assure une composition essentiellement égale des flux partiels même en cas de décalage de l'endroit de déversement par rapport à l'axe central de la trémie.

Afin de régler le débit de différents flux partiels, le dispositif comprend au moins un déflecteur disposé au-dessus d'une des parois, ledit déflecteur étant latéralement déplaçable par rapport à ladite paroi. Le déflecteur comprend par exemple une traverse mobile ayant une certaine largeur, qui s'étend au-dessus de la paroi. En variant la position du déflecteur par rapport à la paroi, on peut modifier la largeur de l'ouverture supérieure des deux compartiments adjacents à cette paroi. Il devient donc possible de varier la largeur de flux partiel et donc la quantité de matériel reçus dans chacun de ces compartiments. Il est à noter que toutes les parois ne doivent pas être munies d'un déflecteur. En effet, afin de pouvoir efficacement régler les débits des flux partiels, il suffit qu'au moins une des parois de chaque compartiment soit munie d'un tel déflecteur.

Ladite paroi, resp. lesdites parois s'étendent de préférence jusqu'à la hauteur de l'ouverture supérieure de ladite caisse. Ainsi le rideau est efficacement partagé dès son entrée dans la caisse. Ceci assure un rapport constant entre les quantités de matière déversées dans les différentes régions de la trémie, même si la vitesse de déversement diffère d'un moyen de déversement à l'autre.

Dans une variante de l'invention, lesdits moyens de déversement comprennent des goulottes s'étendant latéralement de ladite caisse et un fonds de chaque compartiment est incliné en direction de la goulotte respective. Les goulottes peuvent être montées sur la caisse par un moyen de fixation adapté. Dans une version préférée, par contre, chaque goulotte est solidaire au compartiment auquel elle est associée.

Dans une autre variante, la caisse est formée par les extrémités d'alimentation de goulottes individuelles. Dans cette variante, lesdits moyens de déversement comprennent des goulottes orientées dans des directions distinctes, qui sont arrangées l'une à côte de l'autre de manière à former ladite caisse ayant une ouverture supérieure. Les parois desdites goulottes qui s'étendent transversalement par rapport audit rideau de matières délimitent alors les compartiments dans ladite caisse.

Comme les matériaux en vrac ont souvent des propriétés abrasives, il est préférable que des surfaces exposées au rideau de matières ou aux flux partiels sont revêtues d'une matière résistant à l'abrasion.

La présente invention concerne finalement une installation de chargement d'une trémie, comprenant un moyen d'acheminement de matières en vrac, ledit moyen d'acheminement de matières en vrac déversant les matières en vrac dans une région située au-dessus de ladite trémie sous forme d'un rideau de matières, et un dispositif de répartition de matières en vrac tel que décrit ci-dessus.

Une telle installation trouve son application dans tous les domaines dans lesquels une répartition homogène des matières en vrac est désirée. Il est à noter que l'application pour le chargement d'un four à cuve n'en constitue qu'un exemple. De plus il sera clair, que les avantages de la présente invention sont réalisés indépendamment du moyen d'acheminement. Ainsi ce dernier peut par exemple comprendre une bande transporteuse ou un dispositif d'élévateurs à skips.

### Description à l'aide des figures

D'autres particularités et caractéristiques de l'invention ressortiront de la description détaillée de quelques modes de réalisation avantageux présentés ci-dessous, à titre d'illustration, en référence aux dessins annexés. Celles ci montrent:
- Fig.1:: une vue de face sur une installation de chargement d'une trémie;
- Fig.2:: une vue de côté sur l'installation de la fig. 1;

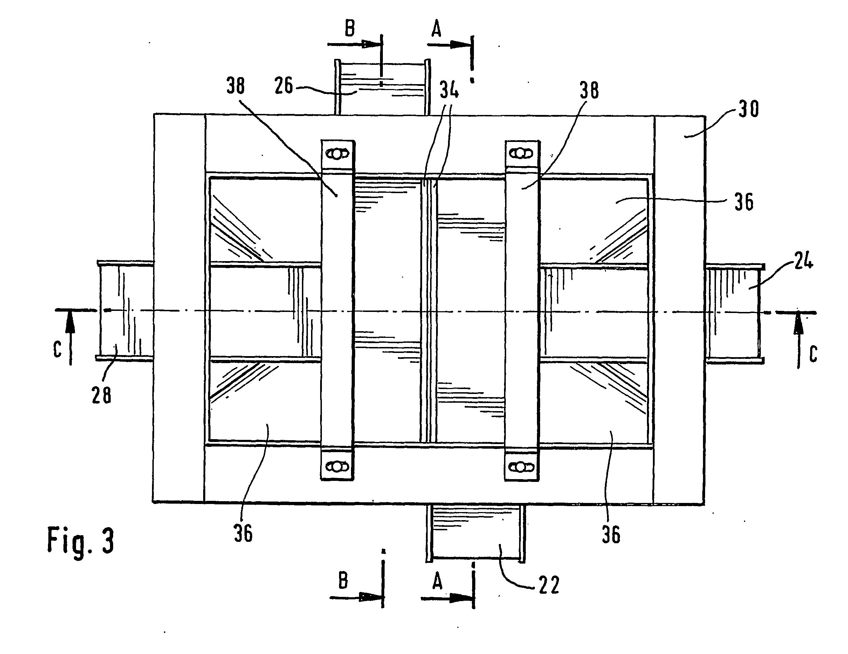

- Fig.3:: une vue en plan sur un dispositif de répartition de matières en vrac

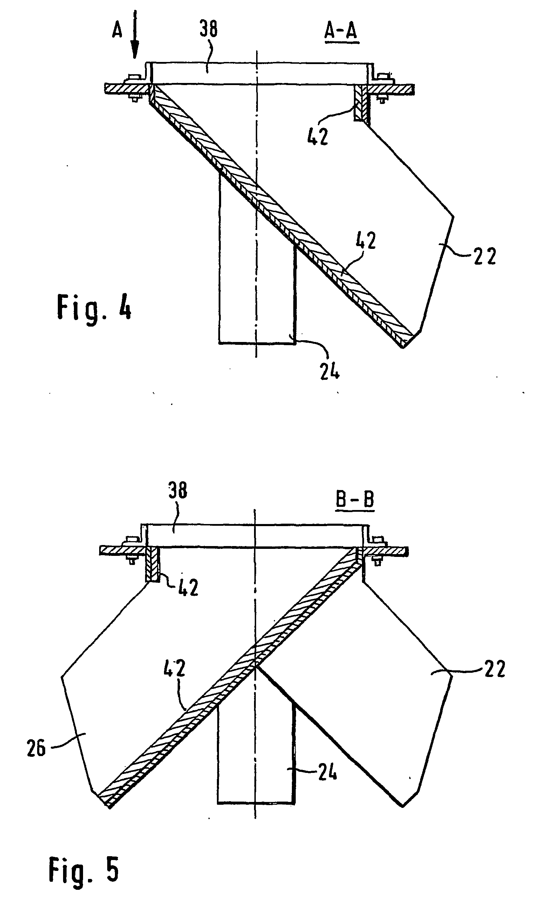

- Fig.4:: une coupe selon la ligne A-A à travers le dispositif de la fig. 3;
- Fig.5:: une coupe selon la ligne B-B à travers le dispositif de la fig. 3;

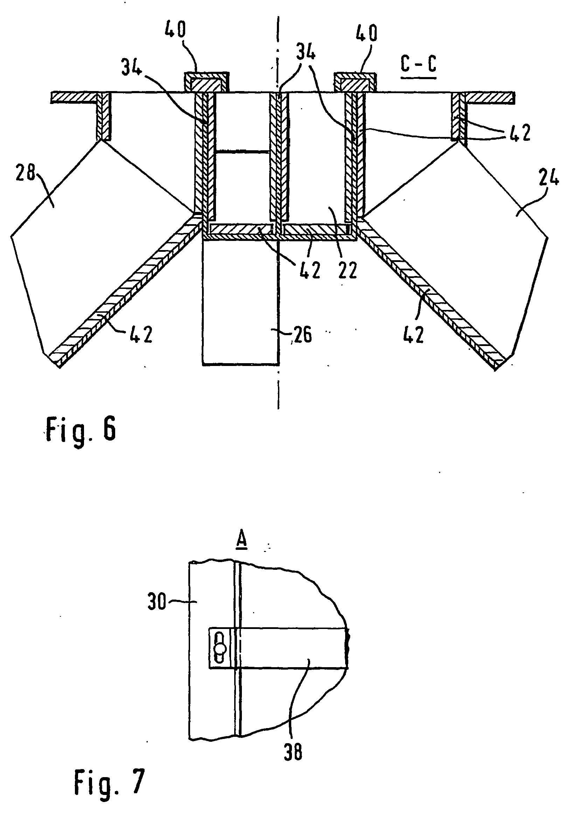

- Fig.6:: une coupe selon la ligne C-C à travers le dispositif de la fig. 3;
- Fig.7:: un détail de la fixation des traverses déflecteurs.

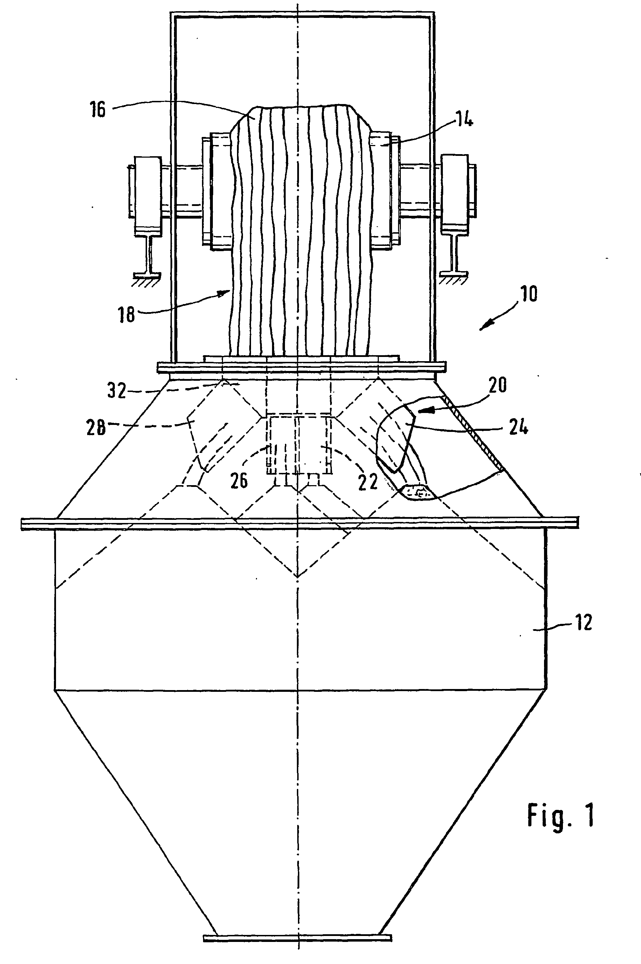

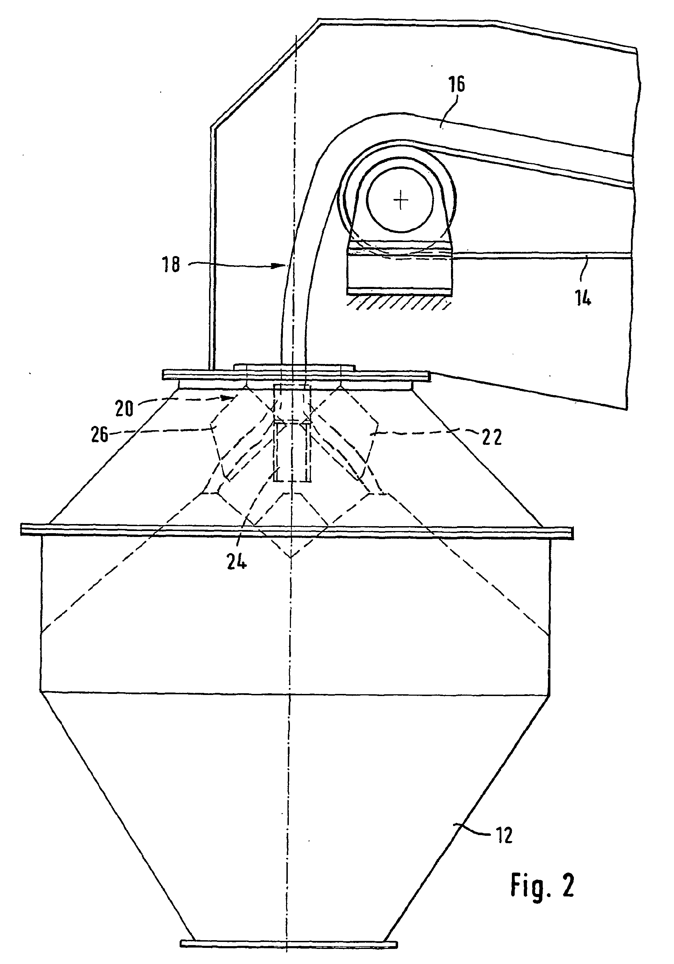

Les fig. 1 et 2 montrent une vue de face resp. de côté sur une installation 10 de chargement d'une trémie 12. L'installation 10 comprend une bande transporteuse 14, qui achemine les matières en vrac 16 au-dessus de la trémie 12. Les matières en vrac sont déversées substantiellement au-dessus de l'axe central de la trémie 12 et tombent alors sous forme de rideau de matières 18 dans l'ouverture supérieure de la trémie 12.

Afin d'assurer une bonne répartition des matières en vrac à l'intérieur de la trémie, un dispositif de répartition de matières en vrac 20 est arrangé dans l'ouverture supérieure de la trémie 12.

Le dispositif 20 comprend plusieurs goulottes 22, 24, 26, 28, qui sont orientées dans des directions distinctes afin de déverser les matières en vrac dans différentes régions de la trémie. Les différentes goulottes sont montées de manière adjacente dans un cadre supérieur 30, de manière à former une caisse 32, qui est ouverte vers le haut et divisée en plusieurs compartiments adjacents par l'intermédiaire de parois 34 des goulottes. Les goulottes sont exécutées de telle sorte que les parois délimitant les compartiments s'étendent perpendiculairement par rapport au rideau de matières, c'est-à-dire perpendiculairement à l'étendue latérale du rideau 18.

Il est à noter, que les goulottes 24 et 28 s'étendent perpendiculairement au compartiments associés. Afin de garantir un bon écoulement des matières en vrac par ces goulottes, les fonds de ces compartiments associés comprennent des tôles inclinées vers les goulottes respectives.

Il est à noter qu'en raison de la répartition latérale du rideau de matières, les compartiments extérieurs sont de préférence plus larges que les compartiments intérieurs. En effet, dû aux mécanismes liés à l'acheminement des matières en vrac, soit par bande transporteuse, soit par élévateurs à skips, le rideau en matière présente généralement une épaisseur plus importante au centre du rideau que dans les régions extérieures. Il en résulte que la teneur en matière du rideau est plus élevé au centre du rideau qu'à l'extérieur de celui-ci. Cette répartition latérale du flux de matière est clairement visible dans la fig. 1.

Afin de pouvoir varier l'ouverture des différents compartiments, et donc de varier la quantité de matière reçue dans les différents compartiments, certaines parois sont munies, à leur extrémité supérieure, de traverses mobiles 38. Ces traverses mobiles 38 sont déplaçables latéralement par rapport à la paroi associée et permettent ainsi d'agrandir resp. de réduire l'ouverture du compartiment adjacent.

Il est à noter que toutes les surfaces exposées soit au rideau de matières soit aux flux partiels à l'intérieur des goulottes sont de préférence revêtues d'une couche de matière résistant à l'abrasion 40 et/ou munies de tôles d'usure 42.

## Revendications

1. Méthode de chargement d'une trémie, comprenant les étapes de
a) déverser les matières en vrac sous forme de rideau de matières au-dessus de ladite trémie, ledit rideau de matières comprenant une étendue latérale,
b) diviser ledit rideau en au moins deux flux partiels, ladite division se faisant transversalement à ladite étendue latérale, à l'aide d'un déflecteur déplaçable latéralement,
c) dévier chacun desdits flux partiels vers une région différente de la trémie.

2. Méthode selon la revendication 1, comprenant l'étape de régler des débits de matières dans les flux partiels par un ajustement des endroits de division dudit rideau de matières.

3. Méthode selon la revendication 1 ou 2, dans laquelle les endroits de division dudit rideau de matières sont choisis de manière à égaliser les débits de matière desdits flux partiels.

4. Dispositif de répartition de matières en vrac, ledit dispositif étant destiné à être arrangé dans un rideau de matières en vrac déversés d'un moyen d'acheminement de matières en vrac, ledit dispositif comprenant
une caisse avec une ouverture supérieure,
au moins une paroi qui s'étend transversalement par rapport audit rideau de matières à l'intérieur de ladite caisse de manière à subdiviser ladite caisse en au moins deux compartiments,
au moins deux moyens de déversement, un desdits moyens de déversement étant associé à chacun des compartiments de ladite caisse, lesdits moyens de déversement étant dirigés de manière à dévier des matières reçues dans les compartiments respectifs dans une région distincte de la trémie, et,
un déflecteur disposé au-dessus de ladite paroi, ledit déflecteur étant latéralement déplaçable par rapport à ladite paroi.

5. Dispositif selon la revendication 4, dans lequel ladite paroi s'étend jusqu'à la hauteur de l'ouverture supérieure de ladite caisse.

6. Dispositif selon l'une des revendications 4 à 5, dans lequel lesdits moyens de déversement comprennent des goulottes s'étendant latéralement de ladite caisse et dans lequel un fonds de chaque compartiment est incliné en direction de la goulotte respective.

7. Dispositif selon la revendication 6, dans lequel chaque goulotte est solidaire au compartiment auquel elle est associée.

8. Dispositif selon l'une des revendications 4 à 7, dans lequel lesdits moyens de déversement comprennent des goulottes orientées dans des directions distinctes, lesdites goulottes étant arrangées l'une à côte de l'autre de manière à former ladite caisse ayant une ouverture supérieure, les parois desdites goulottes qui s'étendent transversalement par rapport audit rideau de matières délimitant les compartiments dans ladite caisse.

9. Dispositif selon l'une des revendications 4 à 8, dans laquelle des surfaces exposées au rideau de matières ou aux flux partiels sont revêtues d'une matière résistant à l'abrasion.

10. Dispositif selon l'une des revendications 4 à 9, comprenant plusieurs parois qui s'étendent transversalement par rapport audit rideau de matières à l'intérieur de ladite caisse de manière à subdiviser ladite caisse en plusieurs compartiments adjacents, et au moins un déflecteur disposé au-dessus d'une desdites parois, ledit détecteur étant latéralement déplaçable par rapport à ladite paroi.

11. Installation de chargement d'une trémie, comprenant un moyen d'acheminement de matières en vrac, ledit moyen d'acheminement de matières en vrac déversant les matières en vrac dans une région située au-dessus de ladite trémie sous forme d'un rideau de matières, et un dispositif de répartition de matières en vrac selon l'une des revendications 4 à 10.

12. Installation de chargement d'une trémie selon la revendication 11, dans laquelle le moyen d'acheminement comprend une bande transporteuse ou un dispositif d'élévateurs à skips.

## Claims

1. Method for loading a hopper comprising the steps of
a) tipping loose material out in the form of a curtain of material over said hopper, said curtain of material having a lateral extent,
b) splitting said curtain into at least two partial streams, by means of a laterally moveable deflector, said split being done transversely to said lateral extent,
c) deflecting each of said partial streams towards a different region of the hopper.

2. Method according to claim 1, comprising the step of regulating the flow rates of material in the partial streams by adjusting the points at which said curtain of material is split.

3. Method according to claim 1 or 2, wherein the points at which said curtain of material is split are chosen to make the flow rates of material in said partial streams equal.

4. Device for distributing loose material, said device being intended to be arranged in a curtain of loose material tipped out from a means of conveying loose material, said device comprising
a box with a top opening,
at least one wall which extends transversely with respect to said curtain of material inside said box in such a way as to subdivide said box into at least two compartments,
at least two tipping-out means, one of said tipping-out means being associated with each of the compartments of said box, said tipping-out means being directed in such a way as to deflect the material received in the respective compartments into a distinct region of the hopper, and
one deflector arranged above the said wall, said deflector being laterally moveable with respect to said wall.

5. Device according to claim 4, wherein said wall extends up to the height of the top opening of said box.

6. Device according to one of claims 4 to 5, wherein said tipping-out means comprise chutes extending laterally from said box and in which a bottom of each compartment is inclined towards the respective chute.

7. Device according to claim 6, wherein each chute is integral with the compartment with which it is associated.

8. Device according to one of claims 4 to 7, wherein said tipping-out means comprise chutes oriented in distinct directions, said chutes being arranged one beside the other so as to form said box having a top opening, the walls of said chutes which extend transversely with respect to said curtain of material delimiting the compartments in said box.

9. Device according to one of claims 4 to 8, wherein the surfaces exposed to the curtain of material or to the partial streams are coated with an abrasion-resistant material.

10. Device according to one of claims 4 to 9 comprising several walls which extend transversely with respect to said curtain of material inside said box so as to subdivide said box into several adjacent compartments, and at least one deflector arranged above one of said walls, said deflector being laterally moveable with respect to said wall.

11. Hopper loading installation comprising a means of conveying loose material, said means for conveying loose material tipping the loose material out into a region situated above said hopper in the form of a curtain of material, and a device for distributing loose material according to one of claims 4 to 10.

12. Hopper loading installation according to claim 11, wherein the conveying means comprises a conveyor belt or a skip elevator device.

## Patentansprüche

1. Verfahren zur Beschickung eines Trichters, das die folgenden Schritte umfasst:
a) Abwerfen des Schüttgutes in Form eines Vorhanges des Gutes oberhalb des Trichters, wobei der Vorhang des Gutes eine seitliche Ausdehnung umfasst;
b) Aufteilen des Vorhanges in mindestens zwei Teilflüsse, wobei die Aufteilung, mit Hilfe einer seitlich verschiebbaren Ablenkvorrichtung, quer zur seitlichen Ausdehnung erfolgt;
c) Umleiten eines jeden dieser Teilflüsse nach einem unterschiedlichen Bereich des Trichters.

2. Verfahren nach Anspruch 1, das den Schritt des Regelns der Förderströme des Gutes in den Teilflüssen durch eine Einstellung der Orte für die Aufteilung des Vorhanges des Gutes umfasst.

3. Verfahren nach Anspruch 1 oder 2, bei dem die Orte für die Aufteilung des Vorhanges des Gutes so gewählt werden, dass die Förderströme des Gutes der Teilflüsse ausgeglichen werden.

4. Schüttgutverteilungsvorrichtung, wobei die Vorrichtung dafür vorgesehen ist, in einem Vorhang aus Schüttgut, das von einem Schüttgutfördermittel abgeworfen bzw. ausgeschüttet wird, angeordnet zu werden, wobei die Vorrichtung Folgendes umfasst:
einen Kasten mit einer oberen Öffnung;
mindestens eine Wand, die sich in Bezug auf den Vorhang des Gutes im Inneren des Kastens so quer erstreckt, dass der Kasten in mindestens zwei Abteile unterteilt wird;
mindestens zwei Ausschüttmittel, wobei jedem der Abteile des Kastens eines der Ausschüttmittel zugeordnet ist, wobei die Ausschüttmittel eine solche Leitung gestatten, dass das in den jeweiligen Abteilen aufgenommene Gut in einen unterschiedlichen Bereich des Trichters umgeleitet wird; und
eine Ablenkvorrichtung, die oberhalb der Wand angeordnet ist, wobei die Ablenkvorrichtung in Bezug auf die Wand seitlich verschiebbar ist.

5. Vorrichtung nach Anspruch 4, bei der sich die Wand bis auf die Höhe der oberen Öffnung des Kastens erstreckt.

6. Vorrichtung nach einem der Ansprüche 4 bis 5, bei der die Ausschüttmittel Schurren umfassen, die sich seitlich von dem Kasten erstrecken und bei der ein Boden von jedem Abteil zur jeweiligen Schurre hin geneigt ist.

7. Vorrichtung nach Anspruch 6, bei der jede Schurre mit dem Abteil, dem sie zugeordnet ist, fest verbunden ist.

8. Vorrichtung nach einem der Ansprüche 4 bis 7, bei der die Ausschüttmittel in unterschiedliche Richtungen ausgerichtete Schurren umfassen, wobei die Schurren so nebeneinander angeordnet sind, dass ein Kasten mit einer oberen Öffnung gebildet wird, wobei die Wände der Schurren, die sich in Bezug auf den Vorhang des Gutes quer erstrecken, die Abteile im Kasten begrenzen.

9. Vorrichtung nach einem der Ansprüche 4 bis 8, bei der die dem Vorhang des Gutes oder den Teilflüssen ausgesetzten Oberflächen mit einem abriebfesten Material verkleidet sind.

10. Vorrichtung nach einem der Ansprüche 4 bis 9, die mehrere Wände, die sich in Bezug auf den Vorhang des Gutes im Inneren des Kasten so quer erstrecken, dass der Kasten in mehrere benachbarte Abteile unterteilt wird, und mindestens eine Ablenkvorrichtung umfasst, die oberhalb einer der Wände angeordnet ist, wobei die Ablenkvorrichtung in Bezug auf die Wand seitlich verschiebbar ist.

11. Anlage zur Beschickung eines Trichters, die ein Schüttgutfördermittel umfasst, wobei das Schüttgutfördermittel das Schüttgut in einen Bereich, der sich oberhalb des Trichters befindet, in Form eines Vorhanges des Gutes ausschüttet, sowie eine Schüttgutverteilungsvorrichtung nach einem der Ansprüche 4 bis 10.

12. Anlage zur Beschickung eines Trichters nach Anspruch 11, bei der das Fördermittel ein Transportband oder eine Kippkübelaufzugsvorrichtung umfasst.
